# EUROPÄISCHE PATENTANMELDUNG

(11) **EP 0 662 561 A2**
(43) Veröffentlichungstag der Anmeldung: **12.07.1995**
(21) Anmeldenummer: 95104601.0
(22) Anmeldetag: 05.09.1992
(51) Int. Cl.: E05F 3/14, F16F 9/30, F16F 7/06, G11B 15/675, F16D 41/22

(54) **Dämpfungselement zur Dämpfung einer Schubbewegung**

(30) Priorität: 25.10.1991 DE 4135216
(62) Teilanmeldung aus: 92115222.9
(71) Anmelder: fischerwerke Artur Fischer GmbH & Co. KG, D-72178 Waldachtal (DE)
(72) Erfinder: Weber, Wilfried, Dipl.-Ing. (FH), D-72296 Schopfloch (DE)

(57) **Zusammenfassung**

Ein Dämpfungselement (5) zur Dämpfung einer vorzugsweise durch eine Feder (3) ausgelöste Schubbewegung besteht aus einem mit einer zähen Flüssigkeit (22) gefüllten Gehäuse, in dem sich eine Friktionsscheibe (18) befindet, die über eine Welle (11) mit einem außerhalb des Gehäuses angeordneten Antriebselement (7) verbunden ist. Um in einer Drehrichtung die Dämpfung aufzuheben, ist zwischen der Friktionsscheibe (18) und dem Antriebselement (7) eine Kupplung (17,25,24) angeordnet, die in einer Drehrichtung eine drehmomentübertragende Verbindung und in entgegengesetzter Drehrichtung eine Unterbrechung der Verbindung ermöglicht.

## Beschreibung

Die Erfindung betrifft ein Dämpfungselement zur Dämpfung einer vorzugsweise durch eine Feder ausgelöste Schubbewegung gemäß der Gattung des Anspruches 1.

Zum Öffnen von Aschenbechern, Schubladen, Aufnahmefächern insbesondere bei in Kraftfahrzeugen eingebauten Geräten wird zur Verbesserung des Bedienungskomfort Dämpfungselemente eingesetzt. Die Dämpfungselemente bestehen aus einem mit einer zähen Flüssigkeit gefüllten Gehäuse, in dem sich über eine Welle mit einem Antriebselement verbunden eine Friktionsscheibe befindet. Bei dem Antriebselement handelt es sich in der Regel um ein Zahnrad, das mit einer Zahnstange oder einem Zahnradsegment in Verbindung steht. Das Dämpfungselement ist an dem zu bewegenden Teil angebracht, auf das beispielsweise ein Federelement als Antriebsaggregat einwirkt. Durch das Abrollen des Zahnrades auf der Zahnstange wird die Friktionsscheibe in der mit einer zähen Flüssigkeit, beispielsweise Silikonoel, gefüllten Gehäuse in Drehung versetzt. Durch an der Umfangsfläche angeordneten Kerben und Ausnehmungen wird die Friktionsscheibe durch die erhöhte Reibung abgebremst, so daß sich eine gedämpfte Schubbewegung des zu bewegenden Teils, beispielsweise einer sich öffnenden Klappe, ergibt. Das Schließen der Klappe erfolgt in der Regel durch Zurückdrücken des Teils von Hand. Durch die direkte Verbindung zwischen Antriebselement und Friktionsscheibe wirkt die Bremse des Dämpfungselementes auch beim Zurückdrücken und Schließen der Klappe. Dies wird üblicherweise von der Bedienungsperson als lästig empfunden, da ein erhöhter Kraft- und Zeitaufwand zum Schließen erforderlich ist. Ferner wird durch einen zu starken Druck beim Schließen das Friktionselement einer erhöhten Belastung ausgesetzt, was einen erhöhten Verschleiß des Dämpfungselementes bewirkt.

In der US-PS 4 697 673 wird daher ein Dämpfungselement vorgeschlagen, das einen in einem Hohlraum des Antriebselementes angeordneten Freilauf besitzt. Dieser Freilauf ist durch eine Torsionsfeder gebildet, die sich in einer Drehrichtung auf der Achse des Antriebselementes verspannt und damit eine drehmomentübertragende Verbindung zwischen dem Antriebselement und der Friktionsscheibe des Dämpfungselementes herstellt. In entgegengesetzter Drehrichtung wird der Durchmesser der Torsionsfeder aufgeweitet, sodaß sich eine Unterbrechung der Verbindung ergibt. Diese Art der Gestaltung des Freilaufes ist für die Übertragung von geringen Kräften wenig geeignet, da die Verspannung bzw. Aufweitung der Torsionsfeder entsprechende Kräfte erfordert. Desweiteren ist die Herstellung und Montage des bekannten Dämpfungselementes sehr aufwendig, da Dämpfungselement und Antriebselement eine Einheit bilden und aufeinander abgestimmt sind.

Der Erfindung liegt die Aufgabe zugrunde, ein Dämpfungselement mit einfachem Aufbau zu schaffen, das nur in einer Drehrichtung eine Dämpfung bewirkt und kostengünstig herstellbar ist.

Die Lösung dieser Aufgabe wird durch die im Anspruch 1 angegebenen Merkmale erreicht. Zwischen der Friktionsscheibe und dem Antriebselement ist eine Kupplung angeordnet, die in einer Drehrichtung eine drehmomentübertragende Verbindung und in entgegengesetzter Drehrichtung eine Unterbrechung der Verbindung ermöglicht. Die Kupplung wird durch ein im Gehäuse des Dämpfungselementes und auf der Welle sitzendes Kupplungselement, beispielsweise einer Mitnehmerscheibe, Mitnehmerflansch oder Mehrkant gebildet, das durch eine Axialverschiebung an die Friktionsscheibe ankuppelbar ist. Durch den Einbau des Kupplungselementes in das Dämpfungselement können die erfindungsgemäßen Dämpfungselemente in einfacher Weise serienmäßig s mit der gewünschten Dämpfungswirkung hergestellt werden. Desweiteren reduziert sich auch der Montageaufwand des Dämpfungselementes in einen Behälter, da die Freilauffunktion im Dämpfungselement integriert ist.

Aus den Unteransprüchen und der Beschreibung ergeben sich weitere vorteilhafte Ausführungsformen der Erfindung.

In der Zeichnung sind Ausführungsbeispiele der Erfindung dargestellt.

Es zeigen:
- Figur 1: das in einem Aufnahmebehälter für Magnetbandkassetten eingebaute Dämpfungselement,
- Figur 2: eine über Gewinde axial verschiebbare Mitnehmerscheibe zum Eingriff in die Friktionsscheibe des Dämpfungselementes,
- Figur 3: die über ein schrägverzahntes Zahnrad als Antriebselement axial verschiebbare Welle des Dämpfungselementes
- Figur 4: eine weitere Variante der Welle gemäß Figur 3 zur Mitnahme der Friktionsscheibe.

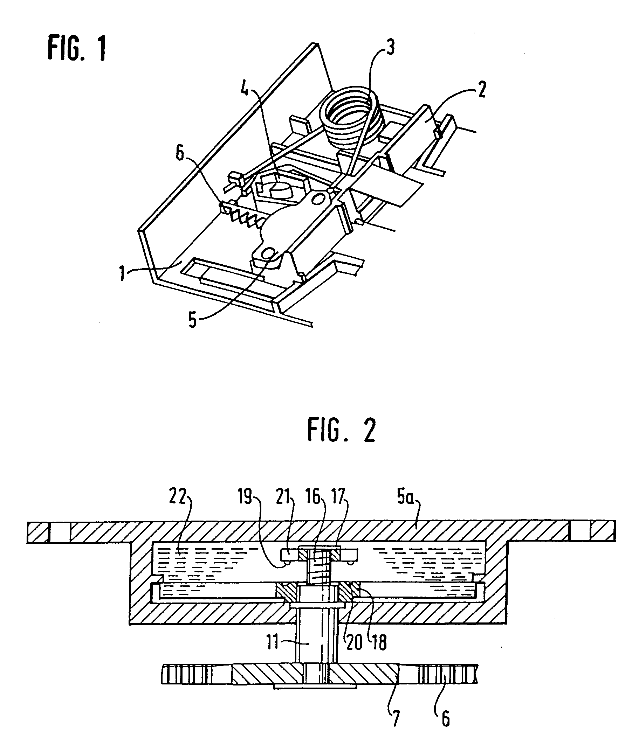

In der in Figur 1 dargestellten Bodenplatte 1 eines Behälters für die Aufnahme von Magnetbandkassetten ist ein Schieber 2 geführt, der von einem Federelement 3 nach dem Entriegeln eines Schließmechanismus 4 den Schieber 2 in die Entnahmeposition für die Kassette verschiebt. Zur Dämpfung dieser Ausfahrbewegung ist auf den Schieber 2 ein Dämpfungselement 5 aufmontiert, das mit einem Zahnrad als Antriebselement in eine auf der Bodenplatte angeordnete Zahnstange 6 eingreift. Beim Ausfahren des Schiebers wird durch das Abrollen des Zahnrades auf der Zahnstange 6 die im Dämpfungselement 5 befindliche Friktionsscheibe mitgedreht, die aufgrund der erhöhten Reibung in der im Dämpfungselement enthaltenen zähen Flüssigkeit als Bremse bei der Ausfahrbewegung des Schiebers 2 wirkt.

Figur 2 zeigt eine in das Dämpfungselement 5a eingebaute Kupplung. Beim Drehen der Welle 11 über die Zahnstange 6 und das Antriebselement 7 wird das Gewinde 16 auf der Welle 11 die mit einem entsprechenden Innengewinde ausgestattete Mitnehmerscheibe 17 gegen die Friktionsscheibe 18 gezogen, sodaß die an der Stirnseite der Mitnehmerscheibe 17 angeordneten Vorsprünge 19 in die auf dem gleichen Durchmesser liegenden Bohrungen 20 der Friktionsscheibe 18 eingreifen. Damit das äußere Moment an der Mitnehmerscheibe 17 größer ist als das Losdrehmoment des Gewindes ist die Mitnehmerscheibe an ihrer Umfangsfläche mit Kerben 21 versehen. Dadurch entsteht auch für die Mitnehmerscheibe eine erhöhte Reibung in der in dem Dämpfungselement 5a eingefüllten zähen Flüssigkeit 22. Durch diese erhöhte Reibung wird die Mitnehmerscheibe 17 am Mitdrehen gehindert, sodaß durch das Gewinde die axiale Verschiebung der Mitnehmerscheibe in Richtung Friktionsscheibe erfolgt. Nach dem Einrasten der Vorsprünge 19 in die Bohrungen 20 der Friktionsscheibe 18 besteht eine drehmomentübertragende Verbindung zwischen dem Zahnrad 7 und der Friktionsscheibe 18, sodaß die Dämpfungswirkung der Friktionsscheibe 18 eintritt. Bei Umkehrung der Drehrichtung des Zahnrades 7 wird durch das Gewinde 16 die Mitnehmerscheibe 17 wieder ausgekuppelt, sodaß die Friktionsscheibe 18 nicht mehr mitgedreht wird. In dieser Drehrichtung erfolgt somit keine Dämpfung der Schubbewegung.

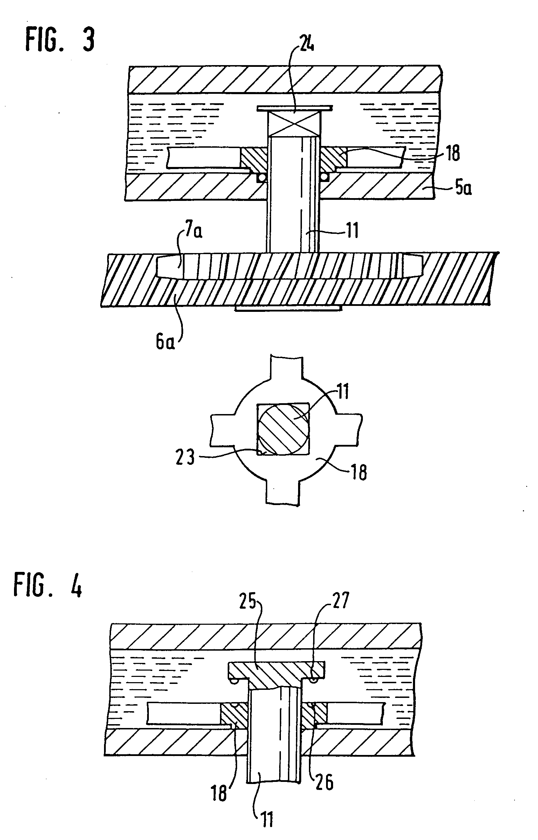

Bei dem in Figur 3 dargestellten Ausführungsbeispiel wird die axiale Verschiebung der Welle 11 durch ein schrägverzahntes Zahnrad 7a erreicht, das von einer ebenfalls schrägverzahnten Zahnstange 6a angetrieben wird. Durch die Schrägverzahnung ergibt sich je nach Drehrichtung eine Kraftkomponente des Zahnrades 7a in Richtung Dämpfungselement 5a oder in entgegengesetzter Richtung. Über diese axiale Verschiebemöglichkeit der Welle 11 kann diese mit der Friktionsscheibe 18 ein- oder ausgekuppelt werden. Zu diesem Zweck weist die Friktionsscheibe eine Vierkantbohrung 23 auf, in die ein an der Welle angeordneter Vierkant 24 durch axiale Verschiebung einziehbar ist. Über diesen Vierkant 24 an der Welle ergibt sich eine drehmomentübertragende Verbindung zwischen dem Antriebselement 7a und der Friktionsscheibe 18. Somit erfolgt automatisch in einer Drehrichtung des Antriebselementes 7a ein Einkuppeln und in der entgegengesetzten Drehrichtung ein Auskuppeln der Welle 11 mit der Friktionsscheibe 18.

Bei dem Ausführungsbeispiel nach Figur 4 ist das Ende der Welle 11 mit einem Mitnehmerflansch 25 versehen, an dessen zur Friktionsscheibe 18 gewandten Stirnseite in entsprechende Bohrungen 26 der Friktionsscheibe 18 eingreifende Vorsprünge 27 angeordnet sind. Die axiale Verschiebung der Welle 11 erfolgt in gleicher Weise wie bei Figur 3. Statt über Vorsprünge und Bohrungen ist auch eine Mitnahme der Friktionsscheibe 18 in der Weise möglich, daß auf der Stirnseite des Mitnehmerflansches ein Zahnkranz angeordnet ist, der in einen entsprechenden Zahnkranz an der Friktionsscheibe eingreift.

## Patentansprüche

1. Dämpfungselement (5) zur Dämpfung einer vorzugsweise durch eine Feder (3) ausgelöste Schubbewegung, bestehend aus einem mit einer zähen Flüssigkeit gefülltem Gehäuse, in dem sich auf einer Welle (11) gelagert und drehmomentübertragend mit der Welle gekoppelte Friktionsscheibe befindet, die über ein außerhalb des Gehäuses auf der Welle (11) sitzendes Antriebselement (7) drehbar ist, **dadurch gekennzeichnet**, daß zwischen der Friktionsscheibe (18) und dem Antriebselement (7, 7a) eine Kupplung angeordnet ist, die durch eine im Gehäuse des Dämpfungselementes und auf der Welle (11) sitzendes Kupplungselement (17, 25, 24) gebildet ist, das durch eine Axialverschiebung an die Friktionsscheibe (18) ankuppelbar ist.

2. Dämpfungselement nach Anspruch 1, **dadurch gekennzeichnet**, daß das Kupplungselement eine Miitnehmerscheibe (17) beziehungsweise ein Mitnehmerflansch (25) ist, an deren Stirnflächen Vorsprünge (19, 27) angeordnet sind, die in entsprechende Bohrungen (20, 26) der Friktionsscheibe (18) eingreifen.

3. Dämpfungselement nach Anspruch 1, **dadurch gekennzeichnet**, daß das Kupplungselement ein auf der Welle (11) angeordneter Mehrkant (24) ist, der in eine entspechend geformte Nabenbohrung (23) der Friktionsscheibe (18) durch axiale Verschiebung der Welle in Eingriff gebracht wird.

4. Dämpfungselement nach Anspruch 1, **dadurch gekennzeichnet**, daß die Mitnehmerscheibe (17) beziehungsweise der Mitnehmerflansch (25) an ihren Stirnflächen einen Zahnkranz mit sägezahnförmiger Verzahnung aufweisen, der in einen entsprechenden Zahnkranz der Friktionsscheibe (18) eingreift.

5. Dämpfungselement nach Anspruch 1, **dadurch gekennzeichnet**, daß die Mitnehmerscheibe (17) über ein Gewinde (16) mit der Welle (11) verbunden und an ihrer Umfangsfläche mit Kerben (21) versehen ist.

6. Dämpfungselement nach Anspruch 1, **dadurch gekennzeichnet**, daß das außerhalb des Gehäuses des Dämpfungselementes auf der Welle (11) sitzende Antriebselement ein Stirnzahnrad mit Schrägverzahnung ist, in die eine schrägverzahnte Zahnstange (6a) zur axialen Verschiebung der Welle (11) eingreift.
